# EUROPEAN PATENT APPLICATION

(11) **EP 2 140 764 A1**
(43) Date of publication of application: **06.01.2010**
(21) Application number: 08159618.1
(22) Date of filing: 03.07.2008
(51) Int. Cl.: A01N 63/02, A01N 31/02, A01N 31/08, A01N 35/02, A01N 35/04, A01N 37/02, A01N 43/08, A01P 17/00, A01P 19/00

(54) **Behaviour modifying compounds for malaria mosquitoes**

(71) Applicant: Wageningen Universiteit, 6701 BH Wageningen (NL)
(72) Inventor: The designation of the inventor has not yet been filed
(74) Representative: Hatzmann, Martin

(57) **Abstract**

The invention comprises the use of (a) a culture of natural skin microbiota existing of at least *Staphylococcus* species, Corynebacteria and *Micrococcus* species or (b) a culture of *Staphylococcus epidermidis* as behaviour modifying agents for mosquitoes. More particularly, culture (a) may produce at least the volatile organic compounds 2-hydroxy-3-pentanone, benzeneethanol and/or furfural and culture (b) may produce at least furfural. Culture (a) may further produce one or more volatile organic compounds selected from the group consisting of 1-butanol, 2,3-butanedione, 2-methyl-1-butanol, 2-methylbutanal, 2-methylbutanoic acid, 3-hydroxy-2-butanone, 3-methyl-1-butanol, 3-methylbutanal, 3-methylbutanoic acid, benzaldehyde and hexanal. Culture (b) may further produce 2-methylbutanal, 2-methylbutanoic acid, 3-methyl-1-butanol, 3-methylbutanal and 3-methylbutanoic acid and hexanal.

Also part of the invention is the use of 2-hydroxy-3-pentanone, benzeneethanol or furfural as mosquito behaviour disrupting compounds.

## Description

### FIELD OF THE INVENTION

The invention relates to means for insect control. More particularly, the present invention relates to compounds that act as a behaviour disrupting compound to mosquitoes for control and/or monitoring purposes.

### BACKGROUND ART

Insect control has been in great demand throughout human history. It is necessary to control harmful insects like mosquitoes, to prevent the spread of disease, such as malaria, dengue and yellow fever. Public health authorities everywhere have expended intense effort on eliminating mosquito-related disease; however, this effort has not been wholly successful, largely because of the difficulty of eliminating mosquitoes.

Female mosquitoes seek a human host from which they obtain a blood meal for egg development. Mosquitoes locate hosts through a combination of chemicals characteristic of the hosts. In this host-seeking, volatile organic compounds (VOCs) of human origin provide essential cues. Humans are differentially attractive to mosquitoes because of the odours they emit (Lindsay, S.W. et al. 1993 J. Med. Entomol.30: 368; Knols, B.G.J. et al. 1995 Trans. R. Soc. Trop. Med. Hyg. 89: 604). Skin microflora plays an important role in the production of human body odours (Noble, W.C., 2004, "The skin microflora and microbial skin disease", Cambridge Univ. Press). If host selection is based on the species composition, metabolic activity and/or density of the skin microflora, then this will bear a direct impact on the number of bites received per person and the resulting risk of infection (Takken, W. and Knols, B.G.J. 1999, Ann. Rev. Entomol. 44: 131). The non-random nature of host selection remains poorly understood yet bears an important impact on exposure to disease (Smith, T. et al, 2006, Am. J. Trop. Med. Hyg. 75: 11). Selective control measures aimed at high-risk groups thus require a detailed understanding of differential attractiveness and the factors governing it.

A review of the research that thus far has been performed on attractants for mosquitoes is given by E.A. Rebollar-Tellez (2005, Folia Entomol. Mex. 44(2): 247). It has appeared that many VOCs show an attractant action, among which acetone, butyric acid and lactic acid seem to give the strongest responses (see e.g., US 6,267,953, DE 197 03 133, EP-0 582 915). Further, skin microflora produce carboxylic acids that were held to be responsible for an attractant effect (Knols, B.G.J., 1996, Lancet, 348: 1322). Also, it has been shown (US 2002/0116863) that a culture of a *Brevibacterium epidermidis* bacterium that is known to be part of the human skin microflora, was able to attract the yellow fever mosquito (*Aedes aegypti*).

Although many compounds are already known as mosquito attractants, there is still need for alternatives.

### SUMMARY OF THE INVENTION

The present invention relates to the use of a culture comprising *Staphylococcus* spp. as a behaviour-modifying agent for mosquitoes.

In particular, the invention relates to such a use wherein the culture is a culture of naturally-derived human skin microbiota, comprising at least *Staphylococcus* spp., Corynebacteria and *Micrococcus* spp or wherein the culture comprises *Staphylococcus epidermidis.*

The inventors have now found that a culture of naturally collected skin microbiota, comprising *Staphylococcus* spp., Corynebacteria and *Micrococcus* spp., produce volatile organic compounds that mediate the behaviour of mosquitoes (*Anopheles* spp., *Aedes aegypti, Ae. albopictus, Culex quinquefasciatus*.; specifically *Anopheles gambiae sensu stricto*). Said culture is found to produce at least one of the volatile organic compounds 2-hydroxy-3-pentanone, benzeneethanol and furfural and, optionally, one or more volatile organic compounds selected from the group consisting of 1-butanol, 2,3-butanedione, 2-methyl-1-butanol, 2-methylbutanal, 2-methylbutanoic acid, 3-hydroxy-2-butanone, 3-methyl-1-butanol, 3-methylbutanal, 3-methylbutanoic acid, benzaldehyde and hexanal

The invention further relates to an agent for modifying behaviour of mosquitoes comprising one or more compounds selected from the group of 2-hydroxy-3-pentanone, benzeneethanol and furfural, and optionally one or more auxiliaries.

With a "behaviour modifying agent" is in particular meant an agent that can act as an attractant or as a repellent for mosquitoes. With "modifying behaviour of mosquitos" is in particular meant cause the mosquitos to be attracted to a specific place or to be repelled from a specific place.

Examples of compounds which may act as an attractant in particular include 2-hydroxy-3-pentanone, and benzeneethanol.

Examples of compounds which may act as a repellent in particular include benzaldehyde, furfural and hexanal.

The inventors have also found that a culture of *Staphylococcus epidermidis* can be used as attractant for mosquitoes, wherein the mosquitoes are preferably of the species *Anopheles gambiae sensu stricto*. In a most preferred embodiment, the *Staphylococcus epidermidis* is the strain DSMZ 11047. The culture of *Staphylococcus epidermidis* preferably comprises, or at least produces during its use, the following compounds: 2-methylbutanal, 2-methylbutanoic acid, 3-methyl-1-butanol, 3-methylbutanal and 3-methylbutanoic acid.

In another embodiment the invention pertains to the use of a compound selected from the group of 2-hydroxy-3-pentanone and benzeneethanol, as attractant for mosquitoes.

In again another embodiment, the invention comprises an agent for attracting mosquitoes comprising one or more compounds selected from the group of 2-hydroxy-3-pentanone and benzeneethanol, and optionally one or more auxiliary volatile organic compounds. Preferably said agent further comprises one or more volatile organic compounds selected from the group consisting of 1-butanol, 2,3-butanedione, 2-methyl-1-butanol, 2-methylbutanal, 2-methylbutanoic acid, 3-hydroxy-2-butanone, 3-methyl-1-butanol, 3-methylbutanal and 3-methylbutanoic acid. More preferably, the agent comprises a culture of *Staphylococcus epidermidis,* preferably strain DSMZ 11047. In a preferred embodiment the agent also comprises an insecticide.

Further part of the invention is a method for combating mosquitoes comprising first attracting them with an agent of the invention and then inactivating them by trapping or intoxication.

### LEGENDS TO THE FIGURES

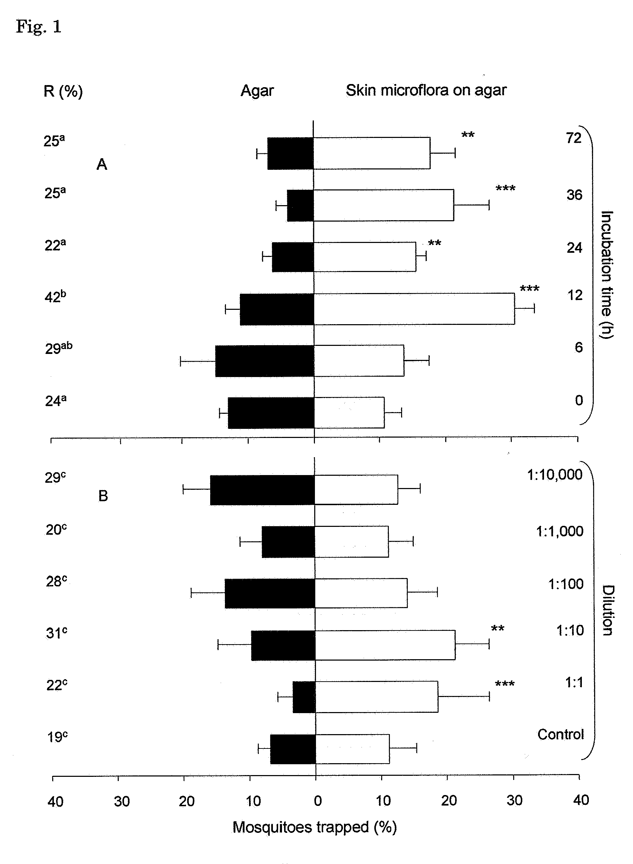

**Figure 1** Average response of *A. gambiae* to skin microflora on blood agar at different times of incubation (A) and at different dilutions of the most attractive treatment (B). Error bars represent standard errors of the mean; ***: X²-test P<0.001; **: X²-test P<0.01. R=Total response to both trapping devices, data not sharing the same superscript letter differ significantly at P<0.05 (GLM). R = the trap entry response expressed as the number of female mosquitoes caught in both trapping devices divided by the number of mosquitoes that flew out of the release cage, data followed by different letters differ significantly at P<0.05 (GLM).

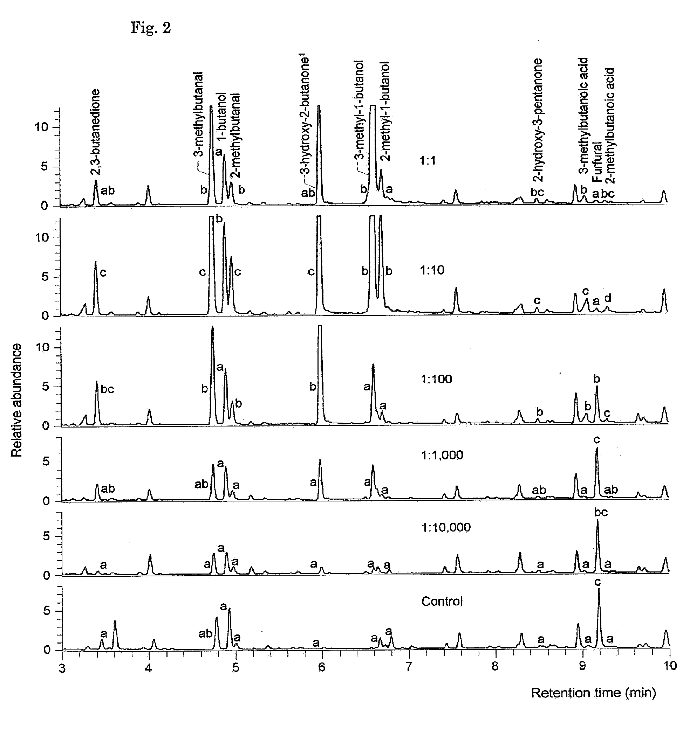

**Figure 2** Part of GC-MS chromatograms of headspaces from blood agar plates with different dilutions of skin microflora and a blood agar plate without skin microflora. Compound peaks not sharing the same superscript letter differ significantly at P<0.05 (GLM). Full list of compounds which differed significantly can be found in table 1. ¹not verified by injection of pure compound.

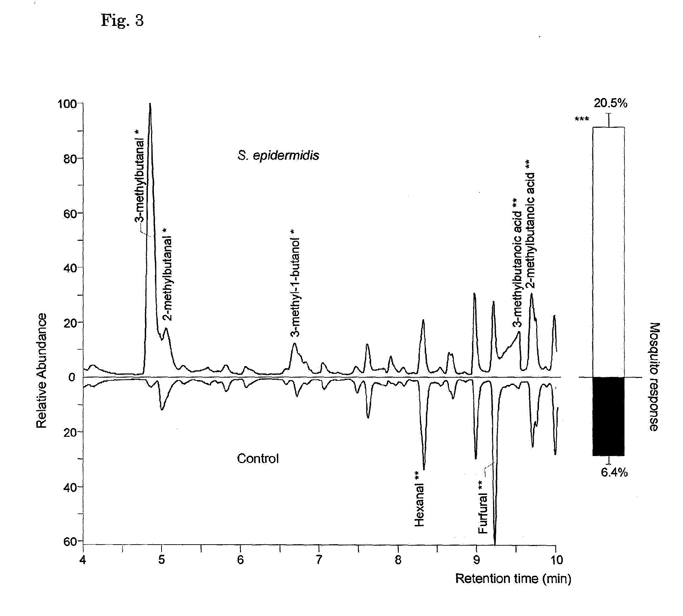

**Figure 3** Part of GC-MS chromatograms of headspaces of a blood agar plate with S. *epidermidis* and a blood agar plate without skin microflora. Compound names are given when found in significantly higher or lower amounts in the treatment compared to the control. *: t-test P<0.05; **: t-test P<0.01. Bars represent the average response of released *A. gambiae* to both odour sources. Error bars represent standard errors of the mean; ***: X²-test P<0.001.

### DETAILED DESCRIPTION

An 'attractant' as used herein is a compound (agent) or combination of compounds (or mixture) that has an attracting capacity for mosquitoes, which is able to attract mosquitoes vis-à-vis a control attractant wherein that compound is absent.

The inventors now have found that a culture of *Staphylococcus epidermidis* can be used as attractant for mosquitoes. This finding represents a new approach in the identification of compounds attractive to mosquitoes and the integration of microbiology in the search for these compounds. The invention that skin bacteria such as *Staphylococcus epidermidis* mediate mosquito behaviour provides novel approaches to the control of mosquitoes. Bacterial cultures can be mass produced, thereby providing a cheap means for combating diseases that are spread by mosquitoes such as malaria and dengue.

It further has been shown that the compounds that are detected in the headspace above a culture of skin microbiota each have their own attracting function. Several of the compounds detected (see figures 1-3 and Table 1) have already been indicated as mosquito attractants, but also the present inventors found two new compounds produced by the bacterial culture that were hitherto not mentioned as mosquito attractants (2,2-hydroxy-3-pentanone and benzeneethanol) and three compounds that act as repellents (benzaldehyde, furfural and hexanal).

As can be seen from the Examples, the initial results have been obtained by a culture from skin microbiota containing a mixture of several bacteria. Surprisingly, it was found that a monoculture with one bacterial species that is abundantly found on the skin was also sufficient to produce a mixture of five attracting compounds. This micro-organism, *Staphylococcus epidermidis,* and in particular the strain DSMZ 11047 (Deutsche Sammlung von Mikroorganismen und Zellkulturen GmbH (German Collection of Microorganisms and Cell Cultures) is thus suitable as attractant for use in mosquito control, especially in control of malaria mosquitoes (*Anopheles gambiae*). It can be used to trap mosquitoes, or, in combination with an insecticide, to attract and kill or otherwise inactivate the mosquitoes.

Of the compounds that were detected 2-hydroxy-3-pentanone, benzeneethanol and furfural were thus far unknown as chemical attractants or repellents. Any of these three compounds could thus function as an mosquito behaviour modifying agent according to the invention. It is, however, preferred not to use one single compound as attractant, but a blend of compounds, since such a blend would improve the attracting capacity (see also US 6,267,953). A blend composition according to the invention then would comprise at least two behaviour-modifying compounds, of which at least one is selected from the group of benzeneethanol, furfural and 2-hydroxy-3-pentanone. One or more further compounds can be chosen from the group consisting of 1-butanol, 2,3-butanedione, 2-methyl-1-butanol, 2-methylbutanal, 2-methylbutanoic acid, 3-hydroxy-2-butanone, 3-methyl-1-butanol, 3-methylbutanal, 3-methylbutanoic acid, benzaldehyde and hexanal, but alternatively, or additionally compounds selected from the group of compounds consisting of carbon dioxide, lactic acid, thiolactic acid, tartaric acid, glycolic acid, acetone, butanal, the compounds mentioned in Table 2 of US 6,267,953, the carboxylic acids mentioned in DE 197 09 121 (cyclohexane carboxylic acid, myristic acid, heptanoic acid, 2-hydroxy-3-phenyl propionic acid, 3-phenyl propionic acid and sebacic acid), caprylic acid, lauric acid and mixtures thereof can be used.

Preferably, the composition (also indicated as attracting agent or agent) of attractant compounds is derived from a culture of skin microflora. More preferably, the composition is derived from *Staphylococcus epidermidis.*

The agent may be used to attract or otherwise modify the behavioural responses of mosquitoes to humans, preferably mosquitoes of the genus *Anopheles,* more preferably *Anopheles gambiae sensu stricto*, or or mosquitoes of the genus *Aedes,* more preferably *Aedes aegypti* or *Aedes albopictus.* They can be used to combat the mosquitoes by applying them as attractant or as a repellent. The agent may be used in a trap, wherein mosquitos are motivated to move into a trap. Such a trap can be equipped with means for catching and optionally killing the mosquitoes, such as, for example, a vacuum inlet. Such an insect trap works according the counter-flow principle, like a vacuum cleaner, sucking air containing the insects inwards, whereby the inlet opening is such that the insects can not escape back into the free air. Also other known apparatuses for catching and/or killing insects like electrocution can be used, like those listed in Table 10 of US 6,267,953. It is also possible that insecticides or other toxic compounds for mosquitoes are located in the trap. Suitable traps are commercially available from Bio Quip products, Gardena, CA; John W. Hock Company, Gainesville, Fla; Bio Sensory Inc., Windham; Mills technology center, Wilimatic, Conn.; or BioGents AG, Regensburg, Germany.

Alternatively, an insecticide may be admixed with the attracting agent, thus forming a deadly combination of attracting and killing compounds. Insecticides that may be used in this respect are, for instance, but not limited to abamectin, acephat, acrinathrin, alanyacarb, aldicarb, allethrin, alphametrin, amitraz, avermectin, AZ 60541, azadirachtin, azamethiphos, azinphos A, azinphos B, azocyclotin, *Bacillus thuringiensis* and isolates thereof, *Bacillus sphaericus* and isolates thereof, barthrin, bendiocarb, benfluracarb, bensultap, bifenthrin, bioallethrin, S-bioallethrin, bioethanomethrin, biophenothrin, bioresmethrin, BPMC, brofenprox, bromethrin, bromophos A, bufencarb, buprofezin, butocarboxin, butethrin, butylpyridaben, cadusphos, carbaryl, carbofuran, carbophenothion, carbosulfan, cartap, chloethocarb, chlorethoxyphos, chlorphenapyr, chlorphenvinphos, chlorpyriphos, chlorpyriphos M, cismethrin, clocythrin, clophentazin, cyanophos, cyclethrin, cycloprothrin, cyhalothrin, cyhexatin, cypermethrin, cyphenothrin, cyromazin, deltamethrin, demeton M, demeton S, demeton S-methyl, diafenthiuron, diazinone, dichlorfenthion, dichlorphos, dicliphos, dicrotophos, diethione, diphlubenziron, dimethoate, dimethrin, dimethylvinphos, dioxathione, disulphotone, ediphenphos, emamectin, esphenvalerate, ethiophencarbv, ethione, ethophenprox, ethoprophos, etrimphos, fipronil, fluazinam, fluazuron, flucycloxurone, flucythrinate, fluphenoxurone, fluphenprox, flumethrin, fluorethrin, fluvalinate, formothione, fubphenprox, furathiocarb, furethrin, GH-601, HCH, heptenophos, hexaflumurone, hexathiazox, imidacloprid, iprobenphos, isazophos, isophenphos, isoprocarb, isoxathione, ivermectin, lambda-cyalothrin, luphenurone, malathion, mecarbam, mervinphos, mesulphenphos, metaldehyd, methacriphos, metamidophos, methidathione, methiocarb, methomyl, metolcarb, milbemycin, monocrotophos, moxidectin, naled, NC 184, NCI-85913, nitenpyram, NRDC-105, NRDC-108, NRDC-132, NRDC-134, NRDC-139, NRDC-140, NRDC-141, NRDC-142, NRDC-146, NRDC-147, NRDC-148, NRDC-156, NRDC-157, NRDC-158, NRDC-159, NRDC-160, NRDC-163, NRDC-165, NRDC-167, NRDC-168, NRDC-169, NRDC-170, NRDC-171, NRDC-172, NRDC-173, NRDC-174, NRDC-181, NRDC-182, omethoate, oxamyl, oxydimethon m, oxydeprophos, parathion A, parathion M, permethrin, phenamiphos, phenazaquine. phenbutatinoxide, phenfluthrin, phenitrothione, phenobucarb, phenothiocarb, phenothrin, phenoxycarb, phenpyrad, phenproximate, phenthion, phenthoate, phenvalerate, phonophos, phorate, phosalone, phosmet, phosphamidone, phosthiazate, phoxim, phtalthrin, pirimicarb, pirimiphos A, pirimiphos M, PP-321, prophenophos, promecarb, propargyl-rethrin, propaphos, proparthrin, propoxur, prothiophos, prothoate, prothrin, pymetozine, pyrachlorphos, pyresmethrin, pyrethrum, pyridaphenthione, pyridaben, pyrimidiphen, pyriproxyphen, quinalphos, resmethrin, RU-12457, RU-15525, RU-24501, S-2852, S-5439, salathione, sebuphos, silafluophen, sulphotep, sulprophos, super-pynamine, tebuphenozide, tebuphenpyrad, tebupirimiphos, teflubenzurone, tefluthrin, temephos, terrallethrin, teralomethrin, terbam, terbuphos, tetrachlorvinphos, thiaphenox, thiodicarb, thiophanox, thiomethone, thioanazine, thuringiensin, tralomethrin, transfluthrin, transresmethrin, triarithen, triazophos, triazurone, trichlorphon, triflumurone, trimethacarb, trimethrin, vamidothione, WL-85871, XMC, xylylcarb, Y-4042, zetamethrin, ZR-3903.

In a specific embodiment, the behaviour modifying agent is used in combination with a biocontrol agent, like a biocontrol agent selected from the group of entomopathogenic fungi, in particular from the group of *Metarhizium anisopliae* and *Beauveria bassiana*.

The agent of the invention can be formulated in the form of a liquid, gel or solid, provided that the attractant compounds can vaporize from said formulation. Any solvent or other ingredient can be used in the formulation as long as it does not harm the evaporation of the attractant and/or the attracting effect. Such solvents may, for instance, be water, ethanol, butanol, methanol, benzene and phenol. Additionally surface active compounds may be added.

Alternatively, the agent of the invention may be admixed with CO₂ and used as a spray. The use of CO₂ in this respect is advantageous, since this gas is a kairomone which is active over a relatively large distance. CO₂ is said to activate the insects to start flying against the wind and thus increasing the chance to be attracted by the agent of the invention. Of course, an insecticide may be added to the spray. In a specific embodiment, at least part of the CO₂ is provided by CO₂ producing yeast, used in combination with a behaviour modifying agent according to the invention.

The invention will be illustrated by the following examples, which are not meant to limit the invention in any way.

### EXAMPLES

### Example 1

Diluted microflora samples (100 µl) were spread on Colombia blood agar plates (Tritium, The Netherlands) and incubated at skin temperature (34°C) before testing. Dilution and incubation time depended on the experiment. Concentrations were determined by diluting the samples decimally and counting bacterial colonies. A range of selective media was used to determine the number and diversity of the human skin microflora samples according to the method described by Taylor et al. (2003, Int. J. Cosm. Sci. 25: 137). Media were selective for staphylococci, aerobic corynebacteria, micrococci, propionibacteria and *Pityrosporum* species (Tritium, The Netherlands).

Attractiveness of the skin microflora samples to *A. gambiae* mosquitoes was tested in a dual-port olfactometer (Braks, M.A.H. and Takken, W., 1999, J. Chem Entomol. 25: 663; Knols, B.G.J. et al., 1994, Med. Vet. Entomol. 8: 386) and with Mosquito Magnet X (MM-X) (American Biophysics Corp., USA) traps. In both setups, skin microflora on blood agar was tested against sterile blood agar. In the olfactometer setup, small blocks (2.25 cm²) of blood agar with skin microflora (2.63·10² cm²) were tested against sterile blood agar after incubation for 0, 6, 12, 24, 36 or 72 hours at 34°C. For each treatment, six times 30 female mosquitoes were released in the olfactometer on six different mornings. Significant differences were found between the treatments and control after 12, 24, 36 and 72 hours of incubation (Fig. 1A; X²-test, df=5, P<0.01). The percentage of mosquitoes trapped during the tests with microflora incubated for 12 hours was significantly higher than with the other treatments (GLM, df=5, P<0.05), except for a sample that had been incubated for 6 hours.

The bacterial density on the underside of the foot was found to be 1.90·10⁵ per cm². Selective plates showed that staphylococci were most abundant (1.86·10⁵ peer cm²); corynebacteria (5.22·10⁴ per cm²) and propionibacteria (4.54·10³ per cm²) were present in lower numbers. Micrococci and *Pityrosporum* were not found during any of the experiments.

### Example 2

For a second series of tests, a concentration range of skin microflora collected from a foot was made (up to 10,000 fold dilution), plated on blood agar and incubated at 34°C for 12 hours. The concentration of bacteria in the 1:10 sample was equal to the concentration of bacteria tested in the first experiment (2.63·10² per cm²). Small blocks (2.25 cm²) of blood agar incubated with each concentration of skin microflora were tested against sterile blood agar in the olfactometer. Agar plates with skin microflora dilutions of 1:1 and 1:10 were significantly more attractive to *A. gambiae* than the control agar plates (Fig. 1B; X²-test, df=5, P<0.05). The percentage of mosquitoes trapped during the tests did not differ significantly between treatments (GLM, df=5, P>0.05). The total bacterial density on the sole of the foot was found to be 1.14·10⁷ per cm², the staphylococci density 9.27·10⁶ per cm², corynebacteria 2.16·10⁶ and propionibacteria 5.73·10⁵ per cm².

Using purge and trap, headspace odours from the agar plates with diluted microflora and from the control agar plates were trapped on Tenax-TA 20/35 (Alltech) adsorbent. Samples were analyzed by gas chromatography - mass spectrometry (GC-MS). This resulted in fourteen compounds that were found in the skin microflora samples, but absent, or in significantly lower amounts, in the control (Table 1). Compounds were identified by injection of pure compounds in the GC-MS. The highest quantity of most compounds was found when the original bacterial sample from the foot was diluted 1:10 (2.56·10² per cm² agar) and incubated for 12 hours (Fig. 2). Interestingly, this dilution also resulted in the highest response during both olfactometer experiments. Two compounds (furfural, benzaldehyde) were found in reduced quantities in the headspace of the samples with the highest microflora concentrations (Table 1).

Nine of the fourteen compounds have been reported previously from studies on human odour (Bernier, U. et al., 1999, Anal. Chem. 71: 1; Bernier, U. et al, 2000, Anal. Chem. A 72: 747-756; Penn, D. et al., 2006, J. Royal Soc. Interface) or human sweat (Meijerink, J. et al., 2000, J. Chem. Ecology 26(6): 1367-1382), which connects our results on odour production by skin microflora with previous studies on human odours. Four of the six compounds, which were also found in the study of Meijerink et al., were only found in incubated sweat, but not in fresh sweat, or in lower quantities. These compounds are interesting, because incubated sweat was found to be more attractive to *A. gambiae* than fresh sweat (Braks, M. et al., 1999, J. Chem. Ecology 25: 663).

### Example 3

To verify that *A. gambiae* is attracted to common skin microflora, an olfactometer experiment with a reference strain of a species of bacteria abundantly found on the human skin (Noble, 2004, ibid), *Staphylococcus epidermidis* (DSMZ 11047), was conducted. Blood agar plates with a concentration of 2.58·10² per cm² *S. epidermidis* were significantly more attractive to *A. gambiae* than the control agar plates (X²-test, df=11, P<0.001). Headspace samples revealed five compounds that were found in the *S. epidermidis* samples, but absent, or in significantly lower quantities, in the control (Table 1). Two compounds (furfural, hexanal) were found in reduced quantities in the headspace of the *S. epidermidis* samples (Table 1).

Skin microflora samples (2.63·10² per cm²) were tested six days against a control in two MM-X traps in a large cage, inside a climate-controlled room. The experiment was repeated six times on different days. Each day, fifty unfed mosquitoes were released in the cage. After four hours, trapped mosquitoes were counted. The MM-X trap with skin microflora attracted significantly more mosquitoes (X²-test, df=5, P<0.001). The average total response in the MM-X setup was high (66%) indicating that skin microflora on blood agar can produce important kairomones. In the olfactometer the average total response depended on the treatment, but could be as high as 52% (12 hours incubation), which is higher than in tests with synthetic compounds (Braks, M. et al., 2001, Physiol. Entomol. 26: 142; Smallegange, R. et al., 2005, Chem. Senses 30: 145) and comparable to or higher than in tests with skin emanations trapped on glass marbles (Qiu, Y. et al., 2006).

Skin microflora only became more attractive than the control after 12 hours of incubation in the first series of olfactometer experiments, or when diluted less than 1:100 in the second series. The number of bacteria or their metabolism is probably not large enough in the other treatments to produce sufficient quantities of attractive compounds. Skin microflora incubated for 12 hours on blood agar at 34°C was more attractive than skin microflora on blood agar at 27°C (X²-test, df=9, P<0.001), probably because the microbial metabolic processes reach their optimum at a higher (body) temperature. This effect was not seen when the attractiveness of blood agar without skin microflora at 34°C was compared with blood agar at 27°C (X²-test, df=7, P=0.19), although blood agar on itself showed attraction (against clean moist air: X²-test, df=5, P<0.001).

Carbon dioxide (CO₂) measurements in the olfactometer showed that the attractiveness of skin microflora on blood agar is not caused by bacterial CO₂ production. Carbon dioxide levels at both ports of the olfactometer were equal, but higher at the point were the mosquitoes were released, because of background CO₂ levels (Fig. S3).

Classification of the microflora in the foot samples showed that staphylococci were most abundant and corynebacteria occurred only in low numbers. *Staphylococcus* species are capable of producing 3-methylbutanoic acid (James, A. et al., 2004, Int. J. Cosmet. Sci. 26: 149), as was also found in the odour samples of this study and which is associated with foot malodour (Ara, K. et al., 2006, Can. J. Microbiol. 52: 357). Corynebacteria and propionibacteria are capable of catabolizing skin lipids to Long Chain Fatty Acids (LCFAs; C14-C30) and LCFAs to Volatile Fatty Acids (VFAs; C2-C12), which were also found in our headspace samples. Micrococcus and *Pityrosporum* were not found, although these are present on feet of 30-58% of healthy humans (Noble, 2004).

**Table 1. Odour compounds found in headspace of bacterial samples and their occurrence in other compound lists**

| Compounds found in higher amounts in headspace of bacterial samples than in control | RT | Skin microbiota | *S. epidermidis* | Studies on human odour |
|---|---|---|---|---|
| 1-butanol | 4.89 | + | - | 4 |
| 2,3-butanedione | 3.42 | + | - | |
| 2-hydroxy-3-pentanone¹ | 8.49 | + | - | |
| 2-methyl-1-butanol | 6.70 | + | - | 4 |
| 2-methylbutanal | 4.97 | + | + | 1,2 |
| 2-methylbutanoic acid | 9.30 | + | + | 4 |
| 3-hydroxy-2-butanone | 5.99 | + | - | 4 |
| 3-methyl-1-butanol | 6.61 | + | + | 4 |
| 3-methylbutanal | 4.75 | + | + | 1 |
| 3-methylbutanoic acid | 9.07 | + | + | 4 |
| Benzeneethanol | 15.70 | + | - | |
| unknown 1 | 16.48 | + | - | |
| unknown 2 | 20.22 | + | - | |
| unknown 3 | 23.51 | + | - | |
| Compounds found in lower amounts in headspace of bacterial samples than in control | | | | |
| benzaldehyde | 12.38 | + | - | 2,3 |
| furfural | 9.18 | + | + | |
| hexanal | 8.29 | - | + | |

| | | | | |
|---|---|---|---|---|
| 1. Bernier UR, Booth MM, Yost RA. 1999. Analysis of human skin emanations by gas chromatography/ mass spectrometry. 1.Thermal desorption of attractants for the yellow fever mosquito (Aedes aegypti) from handled glass beads. Analytical Chemistry 71: 1-7 2. Bernier UR, Kline DL, Barnard DR, Schreck CE, Yost RA. 2000. Analysis of human skin emanations by gas chromatography/mass spectrometry. 2. Identification of volatile compounds that are candidate attractants for yellow fever mosquito (Aedes aegypti). Analytical Chemistry 72: 747-56 3. Curran AM, Rabin SI, Prada PA, Furton KG. 2005. Comparison of the volatile organic compounds present in human odor using SPME-GC/MS. Journal of Chemical Ecology 31: 1607-19 4. Meijerink J, Braks MAH, Brack AA, Adam W, Dekker T, et al. 2000. Identification of olfactory stimulants for Anopheles gambiae from human sweat samples. Journal of Chemical Ecology 26: 1367-82 | | | | |

## Claims

1. Use of a culture comprising *Staphylococcus* spp. as a behaviour-modifying agent for mosquitoes

2. Use according to claim 1, wherein the culture is a culture of naturally-derived human skin microbiota, comprising at least *Staphylococcus* spp., Corynebacteria and *Micrococcus* spp.

3. Use according to claim 2, wherein the culture produces one or more volatile organic compounds selected from the group consisting of 1-butanol, 2,3-butanedione, 2-methyl-1-butanol, 2-methylbutanal, 2-methylbutanoic acid, 3-hydroxy-2-butanone, 3-methyl-1-butanol, 3-methylbutanal, 3-methylbutanoic acid and benzaldehyde.

4. Use according to claim 1, 2 or 3, wherein the culture is a culture of *Staphylococcus epidermidis.*

5. Use according to claim 4, wherein the *Staphylococcus epidermidis* is the strain DSMZ 11047.

6. Use according to claim 4 or 5, wherein the culture produces one or more volatile organic compounds selected from the group consisting of 2-methylbutanal, 2-methylbutanoic acid, 3-methyl-1-butanol, 3-methylbutanal, 3-methylbutanoic acid and hexanal.

7. Use according to any of the preceding claims, wherein mosquitoes are of the genus *Anopheles,* more preferably the species *Anopheles gambiae sensu stricto* or, alternatively, of the genus *Aedes,* more preferably *Aedes aegypti* or *Aedes albopictus*

8. Use according to any of the preceding claims, wherein the culture produces at least one of the volatile organic compounds 2-hydroxy-3-pentanone, benzeneethanol and furfural.

9. Use according to claim 8, wherein the culture produces at least the volatile organic compound furfural.

10. Use of a compound selected from the group of 2-hydroxy-3-pentanone, benzeneethanol and furfural, as behaviour-modifying agents for mosquitoes.

11. Agent for attracting or repelling mosquitoes comprising one or more compounds selected from the group of 2-hydroxy-3-pentanone, benzeneethanol and furfural, and optionally one or more auxiliary volatile organic compounds.

12. Agent according to claim 11, further comprising one or more volatile organic compounds selected from the group consisting of 1-butanol, 2,3-butanedione, 2-methyl-1-butanol, 2-methylbutanal, 2-methylbutanoic acid, 3-hydroxy-2-butanone, 3-methyl-1-butanol, 3-methylbutanal, 3-methylbutanoic acid, benzaldehyde and hexanal.

13. Agent according to claim 11 or 12 comprising a culture of *Staphylococcus epidermis*, preferably strain DSMZ 11047, or a culture of naturally-derived human skin microbiota, comprising at least *Staphylococcus* spp., Corynebacteria and *Micrococcus* spp.

14. Agent according to any of claims 11-13, further comprising an insecticide.

15. Method to combat mosquitoes comprising attracting or repelling them by using an agent according to any of claims 11-14 and subsequently inactivating them by trapping or intoxication.
